(19) Europäisches Patentamt / European Patent Office / Office européen des brevets

(11) **EP 4 234 150 B1**

(12) **EUROPEAN PATENT SPECIFICATION**

(45) Date of publication and mention
of the grant of the patent:
**15.10.2025 Bulletin 2025/42**

(21) Application number: **22159193.6**

(22) Date of filing: **28.02.2022**

(51) International Patent Classification (IPC):
**B23K 26/0622** *(2014.01)* **B23K 26/142** *(2014.01)*
**B23K 26/38** *(2014.01)* B23K 103/04 *(2006.01)*

(52) Cooperative Patent Classification (CPC):
**B23K 26/38; B23K 26/0622; B23K 26/142;**
B23K 2103/04

(54) **LASER CUTTING METHOD**

LASERSCHNEIDVERFAHREN

PROCÉDÉ DE DÉCOUPE AU LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.08.2023 Bulletin 2023/35**

(73) Proprietor: **Bystronic Laser AG**
**3362 Niederönz (CH)**

(72) Inventor: **Becker, Michael**
**3322 Urtenen-Schönbühl (CH)**

(74) Representative: **Frei Patent Attorneys**
**Frei Patentanwaltsbüro AG**
**Hagenholzstrasse 85**
**8050 Zürich (CH)**

(56) References cited:
**EP-A1- 3 527 321** **EP-B1- 2 961 559**
**US-A1- 2007 119 834**

**Description**

FIELD OF THE INVENTION

The invention is in the field of laser cutting of workpieces, and more particular to a laser cutting method for cutting a metal workpiece according to the preamble of claim 1 (see for example US 2007/119834 A1).

BACKGROUND OF THE INVENTION

In laser cutting of metal workpieces, a directed laser beam moves relative to the metal workpiece to locally create a cut in the metal material at the position of incidence of the laser beam on the workpiece. Modern laser cutting machines also direct a gas jet onto the position of incidence of the laser beam. The gas jet may assist the removal ("blowing") of molten metal material in a so-called "melt and blow cutting" or "fusion cutting" process, and/or, if it contains molecular oxygen, may be involved in a chemical reaction ("burning") in a reactive cutting (or "flame cutting") process. Both, the removal and, if applicable, the chemical reaction, help to generate a good cutting kerf.

In cutting processes, the quality of the kerf (the cut) is an often-important issue.

Properties that contribute to the quality of the kerf include the smoothness of the cut surface, the absence of damages caused by the local application of heat, and the absence of burr.

There is an ongoing need for improvements of the cutting process, both, in terms of quality and in terms of cutting speed. Given the fact that more and more laser cutting machines with high laser powers of 10 kW and more are available, larger cutting speeds as well as the cutting of thicker workpieces become feasible. However, if large laser powers are applied, often the quality of the kerf suffers, especially for thick workpieces, in corners, or if fine structures are cut.

EP 2 961 559 B1 discloses laser systems and a method for laser processing sapphire. The method is based on using pulses of single-mode light, wherein the laser is operated in a quasi-continuous wave (QCW) mode, with a duty cycle of between 1% and 10%.

SUMMARY OF THE INVENTION

It is an object of the present invention to provide a laser cutting method overcoming drawbacks of prior art methods. It is especially an object to provide an effective laser cutting method, especially a laser fusion cutting method, suitable for fusion cutting of metal workpieces having a thickness of 8 mm and more, especially if the cut comprises fine structures and/or corners, wherein the quality of the kerf is improved compared to the prior art.

According to an aspect of the invention, a laser cutting method is defined in claim 1, the method comprising the steps of providing the workpiece of a metal, the workpiece having a thickness t, of causing a laser beam emitted by a laser cutting head to impinge on the workpiece while the laser cutting head is moved relative to the workpiece and while a cutting gas is ejected from a laser machining nozzle and is thereby directed onto a position of incidence of the laser beam on the workpiece. The cutting gas may comprise at least 78 volume percent of non-reactive gas portions. According to the present invention, the laser beam in this is generated as a pulsed laser beam with laser pulses having a pulse width of at least 100 $\mu$s, or of at least 200 $\mu$s, at least 500 $\mu$s, or at least 700 $\mu$s or more, and with a peak power (nominal output) of at least 10 kW, preferably at least 15 kW, for example 20 kW or more.

The peak power is the power by which the laser beam is emitted during the pulses if the pulses are rectangular pulses. If the pulses are not rectangular, the peak power is the maximum power achieved during each pulse. In these embodiments, the lower limit of 10 kW (or 15 kW or even 20 kW) may either hold for the peak power or for the pulse mean power (being the average power during the pulse).

A pulse width of at least 100 $\mu$s or even - for example at least 500 $\mu$s - means that the pulses are relatively long. Such long pulses are usually generated by using a laser that is capable of generating CW (continuous-wave) radiation, and by operating the laser in a quasi-CW (quasi-continuous-wave) mode, in which the laser source is switched on for the pulses and is switched off between the pulses. The peak power during the pulses is thus not higher than the power that could be achieved in CW operation. This is in contrast to for example the generation of very short pulses of usually less than 1 ns by methods such as Q-switching or mode locking, in which methods laser energy is accumulated between the pulses in the laser resonator, and hence enhanced peak powers can be achieved compared to the CW power. As a consequence, if a laser is operated in a regime as proposed by the present invention, with long pulses, the achievable maximum average power (power averaged over pulse periods) is lower than if the laser was operated in a CW mode. More in concrete, for pulses with constant power during the pulse (rectangular pulses), the ratio between the average power and the peak power (amplitude power) corresponds to the ratio between the pulse length and the period, the latter being the inverse of the pulse frequency.

Therefore, the approach according to the invention seems somewhat counter-intuitive:

A powerful laser having a high output power of 10 kW or more is used, but the achievable effective energy per time is reduced by the pulsed operation, whereby the achievable cutting speed is reduced, seemingly as if a less complex laser with a correspondingly lower achievable power was used.

The approach has nevertheless turned out to be beneficial, because the inventor has found out that the quality of the kerf is significantly enhanced compared to the prior art, especially for thick workpieces and for cutting corners or fine structures.

This can be attributed to the fact that the cutting gas acts to cool the workpiece during the intervals between the pulses. Thereby, the heat affected zone is reduced, and other effects, especially the burr, are attenuated. Also, the cutting face may be smoother.

In embodiments, therefore, the laser is operated in a quasi-CW mode in which the laser source is switched off between the pulses. Especially, the laser may be operated in a quasi-CW-mode in which also the pump source, by which the active medium of the laser is pumped, is switched off between the pulses.

The cutting speed is according to the present invention between 200 mm/min and 25000 mm/min.

The operation may be such that the laser beam is emitted during a comparably large portion of the time, i.e., the ratio between the pulse duration and the period may be comparably high. This ratio is according to the present invention between 0.1 and 0.9. In embodiments, it may be 0.3 or higher.

The length of the intervals between the pulses, i.e., of the pulse pauses, may similarly to the length of the pulses themselves, is according to the present invention at least 100 $\mu$s or of at least 200 $\mu$s, at least 500 $\mu$s, or at least 700 $\mu$s or more. This allows the metal workpiece to be cooled by the assist gas during these intervals.

The following can be observed:

- Given a workpiece thickness, the results are best if for increasing laser powers (peak powers) and accordingly higher cutting speeds (speed of the laser cutting head relative to the workpiece during the cutting operation), the cut pulse frequency is increased and accordingly the cut pulse width is decreased, if the ratio between average power and peak power is held approximately constant.
- Given a peak power, the results are best if for increasing workpiece thicknesses, the pulse-width-to-period ratio (the duty cycle; and accordingly average-power to peak power ratio) is decreased.

Especially, in embodiments, for the pulse-width-to-period ratio (duty cycle), the following may hold:

$$w/T < \exp(f*(t-t0)) \qquad (ep. (1))$$

where w is the pulse width, T the period, w/T the pulse width-to-period ratio, exp the exponential function, f=0.015 mm$^{-1}$ a scaling factor, t the thickness, and t0=7 mm a minimal thickness.

In a preferred embodiment, equation (1) holds for f=0.2 mm$^{-1}$, especially or f=0.025 mm$^{-1}$.

The pulse width may depend on the cutting speed and material thickness and may be the higher the thicker the material. A maximum value for the pulse width in $\mu$s may for example be about 1000 times the thickness of the workpiece in millimeters. A lower limit for the pulse width is according to the present invention w>100 $\mu$s. In particular and generally, the pulse width may be between 500 $\mu$s and 25'000 $\mu$s.

The mentioned parameters especially hold for laser cutting machines with fiber lasers as laser sources. Fiber lasers in this context are lasers the active gain medium of which is a fiber being doped by a suitable dopant, such as a rare earth element. Fiber lasers are usually optically pumped. The wavelength of the laser radiation may especially be between 400 nm and 3000 nm (visible, near infrared or short-wavelength infrared), for example in the near infrared region between 750 nm and 1400 nm.

In embodiments, it may be beneficial if a nozzle is used that is relatively close to the workpiece Especially, the nozzle outlet may be at a distance between 0 mm (i.e. physical contact between the nozzle and the workpiece) and 3 mm, especially between 0.2 mm and 1.5 mm.

The cutting gas pressure is between 2 bar and 12 bar, for example between 3 bar and 10 bar.

The diameter of the nozzle (at its position of minimal width, usually at the outlet) is between 3 mm and 20 mm, especially between 4 mm and 10 mm

The laser cutting method is especially a fusion cutting method in which the cutting ejected onto the workpiece is a non-reactive gas such as Nitrogen gas, Argon gas, Helium gas or a mixture of these, or possibly a mixture of such non-reactive gas(es) with comparably small amounts (of less than 10%, especially less than 5%, for example less than 3%) of molecular Oxygen. In other words, the content of non-reactive gases is at least 78% and preferably more than 90% or more than 95% or more than 97%.

The approach described in the present text is especially beneficial for steel as a workpiece material. In the present text "steel" includes all kinds of steel, including stainless steel. However, the approach generally works for cutting of metal workpieces, including workpieces of Aluminum and other metals.

The method described in this text may be applied during an entire cutting process, for example if the workpiece is particularly thick, for example 20 mm or thicker. Alternatively, the method described in this text may be applied only during specific stages of the cutting process, for example when fine structures or corners are cut. The method may thus then comprise cutting a structure, wherein the kerf to be made comprises long straight sections in addition to corners or curved sections, wherein the method comprises cutting at least some of the long straight sections in a CW cutting mode with the laser source being constantly switched on and cutting at least some of the corners or curved sections using pulsed operation as described in the present text.

In variants, the following may hold:

- The pulses may be different from rectangular but may be triangular, have a sawtooth shape, etc.
- The pulses may be subject to amplitude modulation, i.e., not all pulses need to have a same peak power. Rather, the peak power may for example be alternating or similar
- The pulses may be subject to pulse width modulation.
- The laser may be operated with a non-zero power between the pulses, i.e., with a basic power.

These variants may be realized individually or in combination or in sub-combinations.

BRIEF DESCRIPTION OF THE DRAWINGS

Hereinafter, embodiments of the present invention are described in more detail referring to drawings. In the drawings, same reference numbers refer to same or similar components. They show:

Fig. 1:   A laser cutting machine;

Fig. 2   A laser cutting head;

Fig. 3   A power-time diagram illustrating the pulsed operation

Fig. 4   examples of cuts generated by a prior art method and by the approach according to the invention, respectively;

Fig. 5   examples of a small structure cut by a prior art method and by the approach according to the invention, respectively; and

Fig. 6   further examples of cuts generated by a prior art method and by the approach according to the invention, respectively.

DESCRIPTION OF THE PREFERRED EMBODIMENTS

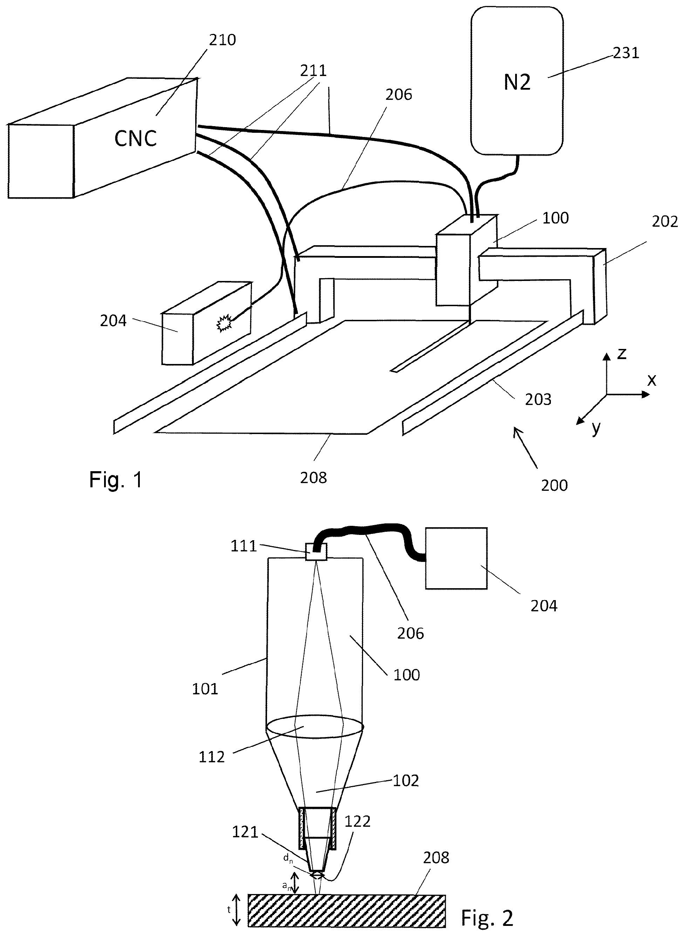

**Figure 1** shows an example of a laser cutting machine 200. The machine comprises a laser source 204 and a transport fiber 206, a laser cutting head 100, and a laser head moving mechanism. A workpiece 208 is supported by a working table (not shown). The laser cutting head moving mechanism comprises a bridge 202 relative to which the laser cutting head 100 is movable in x-direction, and which itself is movable, for example on a pair or rails 203, in y-direction relative to the working table and the workpiece 208. Also a movement of the laser head or of a component thereof (for example the nozzle and/or an optics unit) in the z-direction being the direction perpendicular to the workpiece surface and usually being the vertical direction may in embodiments be possible. The machine further comprises a machine control unit 210 with data lines 211 to the components of the movement mechanism and possibly to further units of the laser cutting machine (such as the laser source, a gas supply control, a cooling unit (not shown), etc.). Alternatively, the laser cutting machine may be laser tube cutting machine with mandrels for fixing and guiding a workpiece.

The workpiece 208 may be a metal sheet, especially a steel plate or for example an Aluminum plate, that is cut by a laser beam emitted by the laser cutting head 100. Alternatively, the workpiece may be a metal tube.

A gas supply comprises a gas tank 231, for example an $N_2$ tank and a flexible gas pipe 232 as well as a gas supply control, and is equipped to supply the cutting gas to the laser cutting head 100 to be ejected to impinge on the position of incidence of the laser beam on the workpiece.

**Figure 2** schematically shows an example of the laser cutting head 100. The laser cutting head comprises an interface 111 for the laser source 204, a laser head body 101 that contains a beam shaping installation 112 for shaping the laser beam 102 in a desired manner and, at a workpiece-side end (the lower end in the depicted orientation in which the laser acts from above the workpiece 208), a nozzle 121, namely a laser machining nozzle. The nozzle 121 may optionally be mounted in a manner that its z position can be varied relative to the laser head body 101 so that a nozzle-outlet-to-workpiece distance $a_n$ is an adjustable parameter (nozzle outlet 122). In addition or as an alternative, the laser head body 101 or a lower portion of the laser head may have an adjustable z-position to adjust the nozzle-outlet-to-workpiece distance $a_n$.

The nozzle-outlet-to-workpiece distance is denoted by $a_n$, the diameter of the nozzle outlet is denoted by $d_n$, and the thickness of the workpiece 208 is denoted by t in Fig. 2.

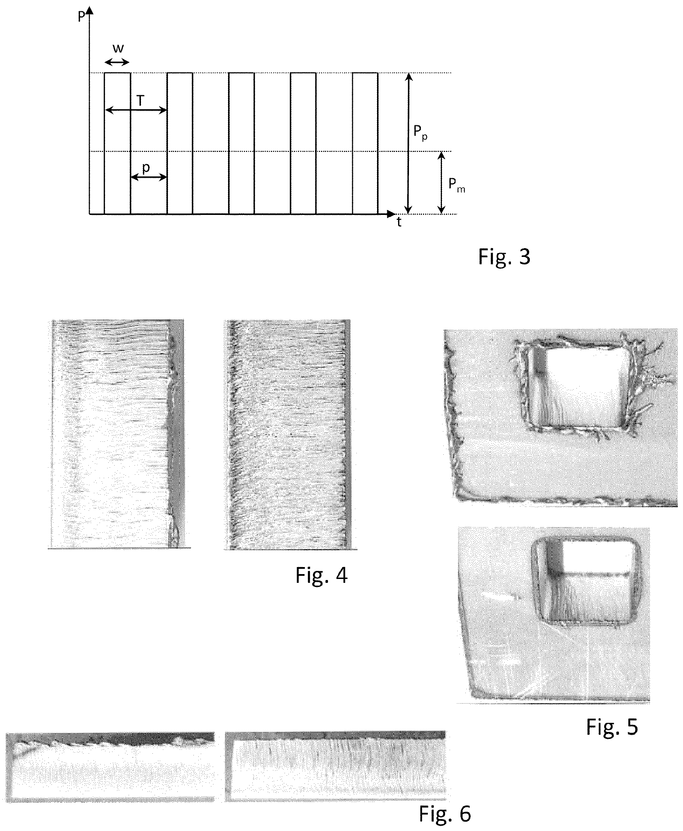

**Figure 3** illustrates the pulsed operation with the power P being shown as a function of time. The pulse width w may be smaller than or greater than the width p of the pulse pauses. The average power $P_m$ for rectangular pulses, as illustrated, corresponds to the Peak power $P_p$ times w/T, where T is the period being the inverse of the pulse frequency f.

**Figure 4** shows examples of a cut generated in a 15 mm thick plate of S355 steel. The left panel shows a cut obtained by CW laser cutting, and the right panel shows a cut obtained by the approach according to the present invention. The burr on left panel has a height of between 0.8 and 1.5 mm, whereas the burr on the right-hand side has a height of only between 0.25 mm and 0.5 mm and is thus substantially reduced. The roughness is somewhat higher in the right panel than in the left panel.

**Figure 5** depicts examples of a structure having the shape of a square with rounded edges, again cut out from a 15 mm thick plate of S355 steel. The sample in the top panel is generated using the parameters used for the cut in shown in the left panel of Fig. 4, whereas the sample on the bottom panel was obtained using the cutting parameters from the right panel of Fig. 4. Clearly, the burr is substantially reduced on the right side. Not only the square cut-out but also the outer contour of the depicted sample is generated by the according cutting method.

**Figure 6** illustrates the fact that also the heat affected zone is reduced by the approach according to the invention (right panel) compared to CW operation (left panel, with heat influenced zones on the bottom).

**Examples:** For a 20 mm thick workpiece of steel, a systematical experimental investigation has revealed, for a good kerf quality, the parameters reproduced in the following table (the values for 60 kW peak power are theoretical values and not experimentally confirmed; the average performance is the average power):

| Peak Power [kW] | 10 | 15 | 30 | 60 |
|---|---|---|---|---|
| Puls Cut Speed [mm/min] | 800 | 1500 | 4000 | 10000 |
| CutPulseFrequency [Hz] | 75 | 85 | 170 | 360 |
| CutPulseWidth [$\mu$s] | 9000 | 8000 | 4000 | 1900 |
| Average Performance [kW] | 6.75 | 10.2 | 20.4 | 41.04 |
| Average Performance/Peak Power) | 67.50% | 68.00% | 68.00% | 68.40% |

The following table shows the results of investigation of parameters for a good kerf quality for different material thicknesses t (for a workpiece of mild steel), for a laser having a peak power $P_L$ of 15 kW:

| t [mm] | 6 | 8 | 10 | 12 | 15 | 20 | 25 | 30 |
|---|---|---|---|---|---|---|---|---|
| $v_c$ [mm/min] | 14000 | 8400 | 5920 | 4480 | 3040 | 1500 | 848 | 400 |
| $P_L$ [kW] | 15 | 15 | 15 | 15 | 15 | 15 | 15 | 15 |
| frep [Hz] | 550 | 410 | 320 | 230 | 140 | 70 | 40 | 22 |
| w [$\mu$s] | 1800 | 2000 | 2500 | 3500 | 5300 | 9000 | 13500 | 18000 |
| w/T | 0.990 | 0.820 | 0.800 | 0.805 | 0.742 | 0.630 | 0.54 | 0.396 |
| $E_P$ [J] | 27.00 | 30.00 | 37.50 | 52.50 | 79.50 | 135.00 | 202.5 | 270 |
| $a_f$ [mm] | 2.4 | 2.5 | 4 | 5 | 6.5 | 10 | 12 | 17 |
| $p_G$ [bar] | 7 | 6.5 | 7 | 7.5 | 5 | 3.5 | 4.5 | 5.5 |
| $d_n$ [mm] | 5 | 5.5 | 6 | 6 | 6 | 6 | 6 | 6 |

In this table, $a_f$ is the focal position (distance of the laser focus from the workpiece surface; positive values indicate that the focus is underneath the workpiece surface, i.e., the focus is within the workpiece), $p_G$ is the gas pressure of the cutting gas, and $d_n$ is the nozzle diameter.

Thus, given a peak power, good results are achieved if the laser pulse energy $E_p = w*P_L$ is higher for increasing material thicknesses, while the cutting speed is reduced for increasing material thicknesses and accordingly increasing pulse energies. Put differently, if the cutting speed is increased, the pulse energy is decreased.

**Claims**

1. A laser cutting method for cutting a metal workpiece (208), wherein the workpiece (208) has a thickness of at least 8 mm, the method comprising the steps of providing the workpiece (208) of a metal, the workpiece having a thickness t, of causing a laser beam from a laser beam source to impinge on the workpiece (208) while the laser beam is moved relative to the workpiece, to generate a kerf through the workpiece, and while a cutting gas is ejected from a laser machining nozzle (121) and is thereby directed onto a position of incidence of the laser beam on the workpiece, the cutting gas comprising at least 78 volume percent of non-reactive gas portions, **characterized in that** the laser beam is a pulsed laser beam with laser pulses having a pulse width of at least 100 $\mu$s, the laser pulses having a peak power of at least 10 kW, wherein a cutting speed, being a velocity of the laser beam relative to the workpiece, is between 200 mm/min and 25000 mm/min, wherein a ratio between an average power and the peak power is between 0.1 and 0.9, wherein a diameter of the laser machining nozzle is between 3 mm and 20 mm, wherein a pressure of the cutting gas supplied to the laser machining nozzle (121) is between 2 bar and 12 bar.

2. The method according to claim 1, wherein the pulse width is between 500 $\mu$s and 25000 $\mu$s.

3. The method according to claim 1 or 2, wherein the pulses have a peak power of at least 15 kW.

4. The method according to any one of the previous claims, wherein the cutting gas contains less than 5% oxygen, for example no oxygen.

5. The method according to any one of the previous claims, wherein w/T<exp(f*(t-t0)), with w being the pulse width, T being the period, t the thickness of the workpiece, f=0.015 mm$^{-1}$ and t0=7 mm.

6. The method according to any one of the previous claims, wherein the laser beam is generated in an active gain medium being a doped fiber and is guided to a laser cutting head carrying the laser machining nozzle by a transport fiber.

7. The method according to any one of the previous claims, wherein the laser cutting method is a laser fusion cutting method.

**Patentansprüche**

1. Laserschneidverfahren zum Schneiden eines metallischen Werkstücks (208), wobei das Werkstück (208) eine Dicke von mindestens 8 mm aufweist, wobei das Verfahren die folgenden Schritte umfasst: Bereitstellen des Werkstücks (208) aus einem Metall, wobei das Werkstück eine Dicke t aufweist, Bewirken, dass ein Laserstrahl von einer Laserstrahlquelle auf das Werkstück (208) auftrifft, während der Laserstrahl relativ zum Werkstück bewegt wird, um eine Schnittfuge durch das Werkstück zu erzeugen, und während ein Schneidgas aus einer Laserbearbeitungsdüse (121) ausgestoßen wird und dadurch auf eine Einfallsposition des Laserstrahls auf das Werkstück gerichtet wird, wobei das Schneidgas mindestens 78 Volumenprozent nicht reaktive Gasanteile umfasst, **dadurch gekennzeichnet, dass** der Laserstrahl ein gepulster Laserstrahl mit Laserimpulsen mit einer Impulsbreite von mindestens 100 $\mu$s ist, wobei die Laserimpulse eine Spitzenleistung von mindestens 10 kW aufweisen, wobei eine Schneidgeschwindigkeit, die eine Geschwindigkeit des Laserstrahls relativ zum Werkstück darstellt, zwischen 200 mm/min und 25000 mm/min liegt, wobei ein Verhältnis zwischen einer Durchschnittsleistung und der Spitzenleistung zwischen 0,1 und 0,9 liegt, wobei ein Durchmesser der Laserbearbeitungsdüse zwischen 3 mm und 20 mm liegt, wobei ein Druck des der Laserbearbeitungsdüse (121) zugeführten Schneidgases zwischen 2 bar und 12 bar liegt.

2. Verfahren nach Anspruch 1, wobei die Impulsbreite zwischen 500 $\mu$s und 25000 $\mu$s liegt.

3. Verfahren nach Anspruch 1 oder 2, wobei die Impulse eine Spitzenleistung von mindestens 15 kW aufweisen.

4. Verfahren nach einem der vorhergehenden Ansprüche, wobei das Schneidgas weniger als 5 % Sauerstoff, z. B. keinen Sauerstoff, enthält.

5. Verfahren nach einem der vorhergehenden Ansprüche, wobei w/T<exp(f*(t-t0)) gilt, wobei w die Impulsbreite, T die Periode, t die Dicke des Werkstücks, f = 0,015 mm$^{-1}$ und t0 = 7 mm ist.

6. Verfahren nach einem der vorhergehenden Ansprüche, wobei der Laserstrahl in einem aktiven Verstärkungsmedium erzeugt wird, das eine dotierte Faser ist, und durch eine Transportfaser zu einem Laserschneidkopf geführt wird, der die Laserbearbeitungsdüse trägt.

7. Verfahren nach einem der vorhergehenden Ansprüche, wobei das Laserschneidverfahren ein Laser-Schmelzschneidverfahren ist.

## Revendications

1. Procédé de découpe au laser pour découper une pièce (208) métallique, dans lequel la pièce (208) présente une épaisseur d'au moins 8 mm, le procédé comprenant les étapes consistant à fournir la pièce (208) en métal, la pièce présentant une épaisseur t, à amener le faisceau laser provenant d'une source de faisceau laser à frapper la pièce (208) tandis que le faisceau laser est déplacé par rapport à la pièce, pour générer une encoche à travers la pièce, et tandis qu'un gaz de découpe est éjecté d'une buse (121) d'usinage laser et est ainsi dirigé sur une position d'incidence du faisceau laser sur la pièce, le gaz de découpe comprenant au moins 78 % en volume de parties de gaz non réactifs, **caractérisé en ce que** le faisceau laser est un faisceau laser pulsé présentant des impulsions laser d'une largeur d'impulsion d'au moins 100 $\mu$s, les impulsions laser présentant une puissance de crête d'au moins 10 kW, dans lequel une vitesse de découpe, qui est une vitesse du faisceau laser par rapport à la pièce, est comprise entre 200 mm/min et 25 000 mm/min, dans lequel un rapport entre une puissance moyenne et la puissance de crête est compris entre 0,1 et 0,9, dans lequel un diamètre de la buse d'usinage laser est compris entre 3 mm et 20 mm, dans lequel une pression du gaz de découpe délivré dans la buse (121) d'usinage laser est comprise entre 2 bar et 12 bar.

2. Procédé selon la revendication 1, dans lequel la largeur d'impulsion est comprise entre 500 $\mu$s et 25 000 $\mu$s.

3. Procédé selon la revendication 1 ou 2, dans lequel les impulsions présentent une puissance de crête d'au moins 15 kW.

4. Procédé selon l'une quelconque des revendications précédentes, dans lequel le gaz de découpe contient moins de 5 % d'oxygène, et par exemple ne contient pas d'oxygène.

5. Procédé selon l'une quelconque des revendications précédentes, dans lequel w/T<exp(f*(t-t0)), w désignant la largeur d'impulsion, T désignant la période, t l'épaisseur de la pièce, f=0,015 mm$^{-1}$ et t0=7 mm.

6. Procédé selon l'une quelconque des revendications précédentes, dans lequel le faisceau laser est généré dans un milieu de gain actif qui est une fibre dopée et qui est guidé vers une tête de découpe au laser portant la buse d'usinage laser à l'aide d'une fibre de transport.

7. Procédé selon l'une quelconque des revendications précédentes, dans lequel le procédé de découpe au laser est un procédé de découpe par fusion laser.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007119834 A1

- EP 2961559 B1